# EUROPÄISCHE PATENTANMELDUNG

(11) **EP 3 907 466 A1**
(43) Veröffentlichungstag der Anmeldung: **10.11.2021**
(21) Anmeldenummer: 20172952.2
(22) Anmeldetag: 05.05.2020
(51) Int. Cl.: G01B 11/25, G06T 7/50, H04N 5/3745

(54) **3D-SENSOR UND VERFAHREN ZUR ERFASSUNG VON DREIDIMENSIONALEN BILDDATEN EINES OBJEKTS**

(71) Anmelder: SICK AG, 79183 Waldkirch (DE)
(72) Erfinder: Müller, Romain, 79252 Stegen (DE); Johannesson, Mattias, 58593 Linköping (SE)

(57) **Zusammenfassung**

Es wird ein 3D-Sensor (10) zur Erfassung von dreidimensionalen Bilddaten eines Objekts (24) in einem Erfassungsbereich (22) angegeben, der eine Beleuchtungseinheit (12) zur Erzeugung mindestens einer Beleuchtungslinie (20) in dem Erfassungsbereich (22), eine Ablenkeinheit (18) zum Bewegen der Beleuchtungslinie (20) über den Erfassungsbereich (22), einen Bildsensor (30) mit einer Vielzahl von Lichtempfangselementen (30a) sowie eine Steuer- und Auswertungseinheit (32) aufweist, die dafür ausgebildet ist, aus Empfangssignalen der Lichtempfangselemente (30a) die dreidimensionalen Bilddaten zu erzeugen. Dabei ist der Bildsensor (30) ein ereignisbasierter Bildsensor, dessen Lichtempfangselemente (30a) als Empfangssignale Empfangsereignisse erzeugen.

## Beschreibung

Die Erfindung betrifft einen 3D-Sensor und ein Verfahren zur Erfassung von dreidimensionalen Bilddaten eines Objekts nach dem Oberbegriff von Anspruch 1 beziehungsweise 15.

Es sind zahlreiche Technologien zur Erfassung von dreidimensionalen Bilddaten bekannt. Lichtlaufzeitkameras messen entweder direkt die Zeit, die ein Photon für den Weg zu einem Objekt und zurück benötigt (dTOF, direct Time of Flight) oder die Phasenverschiebung zwischen einem modulierten Lichtsignal und dem wieder empfangenen Lichtsignal (iTOF, indirect Time of Flight). Hier wird meist eine spezielle Hardware eingesetzt, um die Lichtlaufzeiten zu messen. Darüber hinaus ist wenig Rechenaufwand erforderlich, aber die Auflösung ist durch die Pixelzahl einerseits und die Genauigkeit der Abstandsmessung andererseits begrenzt.

Stereokameras sind dem menschlichen Sehen nachempfunden und bestimmen die Disparität von aus zwei Perspektiven aufgenommenen Bildmerkmalen, die sich durch Korrelation auffinden und anhand der Kamerageometrie, insbesondere des Basisabstands der aufnehmenden Bildsensoren, in Abstände umrechnen lässt. Mit der Stereoskopie verwandt sind Projektionsverfahren, die ein bekanntes Lichtmuster mit einem Bild korrelieren, bei dessen Aufnahme das Lichtmuster auf die Szenerie projiziert wurde. Derartige Verfahren benötigen aufwändige Auswertungen, die auch komplex werden können, um verlässliche und dichte Tiefenkarten zu erhalten, d.h. möglichst lückenlose dreidimensionale Bilder.

Ein weiteres Verfahren, das ähnlich einem Projektionsverfahren die Verzerrungen eines Lichtmusters durch die Objektkonturen auswertet, ist die Lasertriangulation. Dabei wird eine Lichtlinie über das Objekt geführt und aus dem Linienversatz im Kamerabild die Objektkontur rekonstruiert. Durch das einfache Lichtmuster wird die Komplexität der Auswertung reduziert, aber dennoch muss die Lichtlinie im Kamerabild wiedergefunden und ausgewertet werden.

Es gibt weitere Möglichkeiten der 3D-Erfasssung, etwa Lichtfeldkameras oder Computertomographie, die nicht alle diskutiert werden sollen. Bekannt sind auch noch Laserscanner, die aber nicht auf einer Kamera beziehungsweise einem Bildsensor basieren.

In jüngster Zeit ist eine neuartige Kameratechnik entstanden, die sogenannte ereignis-oder eventbasierte Kamera. Sie wurde jedoch nicht entwickelt, um eine 3D-Erfassung zu ermöglichen, sondern um Bewegungen und allgemein Veränderungen besonders effektiv zu erfassen. Das ist bewegungsspezifischen Neuronen in den ersten Verarbeitungsebenen des visuellen Cortex' nachempfunden, und deshalb werden solche Kameras auch als neuromorphologische Kameras bezeichnet.

Eine herkömmliche Kamera belichtet mit einer regelmäßigen Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen. In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen, können aber bei maschinellen Auswertungen Vorteile bieten.

Eine ereignisbasierte Kamera wird beispielsweise in einem Whitepaper der Firma Prophesee beschrieben, das auf deren Internetseite abgerufen werden kann. Aus der WO 2015/036592 A1, WO 2017/174579 A1 und WO 2018/073379 A1 sind jeweils Pixelschaltkreise für eine ereignisbasierte Kamera bekannt. Dabei geht es jedoch nicht um 3D-Erfassung.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog.(CVPR), Vol. 1. 2018 stellt Verfahren vor, wie sich aus den Daten einer ereignisbasierten Kamera Bewegung, Entfernungen und optischer Fluss bestimmen lassen. Die Entfernungsmessung entspricht hier einem Stereoskopieansatz.

In der US 10 158 844 B2 wird eine 3D-Erfassung vorgestellt, in der die Pixel mit zwei Lichtmustern moduliert werden, nämlich einem beispielsweise auf einem Sägezahnpfad bewegten Lichtfleck ("curtain modulation") und einem gerastert projizierten Binärcode ("superpixel modulation"). Da letztlich die 3D-Information aus Nachbarschaftsbeziehungen der Pixel ermittelt werden, ist die Ortsauflösung reduziert.

Die Arbeit von Gruss, Andrew, L. Richard Carley und Takeo Kanade. "Integrated sensor and range-finding analog signal processor", IEEE Journal of Solid-State Circuits 26.3 (1991): 184-191 beschreibt ein besonders schnelles Lasertriangulationsverfahren mit einer Bildrate von 1000 Hz. Die Pixel merken sich anhand einer Intensitätsschwelle, wann sie die scannend bewegte Laserlinie erstmals registrieren. Nachteilig ist die Empfindlichkeit gegenüber Fremdlicht aufgrund der festen Intensitätsschwelle. Der Bildsensor wird ganz herkömmlich mit einer festen Bildrate ausgelesen, es handelt sich also keineswegs um einen ereignisbasierten Bildsensor mit asynchroner Ausgabe der einzelnen Pixel.

In Brandli, Christian, et al. "Adaptive pulsed laser line extraction for terrain reconstruction using a dynamic vision sensor", Frontiers in Neuroscience 7 (2014): 275 wird ein ereignisbasierter Bildsensor verwendet, um zur 3D-Erfassung eine projizierte Laserlinie aufzunehmen. Dieser Laserlinie wird gepulst und nicht scannend bewegt. Die Auswertung zur Triangulation wird auf diese Weise nicht vereinfacht.

Matsuda, Nathan, Oliver Cossairt und Mohit Gupta. "Mc3d: Motion contrast 3d scanning." 2015 IEEE International Conference on Computational Photography (ICCP), IEEE, 2015 befasst sich mit einem Musterprojektionsverfahren unter Verwendung eines ereignisbasierten Bildsensors. Es fehlt auch hier an einer einfachen 3D-Auswertung.

Leroux, T., S-H. leng und Ryad Benosman. "Event-based structured light for depth reconstruction using frequency tagged light patterns", arXiv preprint arXiv: 1811.10771 (2018) verwenden ebenfalls ein Musterprojektionsverfahren und einen ereignisbasierten Bildsensor. Das Lichtmuster ist jedoch recht speziell und nicht mit einer Lasertriangulation unter Verwendung einer Laserlinie zu vergleichen. Stattdessen besteht das Lichtmuster hier aus Punkten, die mit jeweiligen Frequenzen moduliert werden.

Es gibt zusammenfassend nicht die eine für alle Anwendungen passende und beste 3D-Kamera. Trotz der zahlreichen bekannten Ansätze besteht demnach immer noch Bedarf für eine weitere 3D-Erfassung, die zumindest situationsbezogen einige der genannten Nachteile überwindet.

Es ist daher Aufgabe der Erfindung, eine verbesserte Erfassung von dreidimensionalen Bilddaten anzugeben.

Diese Aufgabe wird durch einen 3D-Sensor und ein Verfahren zur Erfassung von dreidimensionalen Bilddaten eines Objekts nach Anspruch 1 beziehungsweise 15 gelöst. Der 3D-Sensor, insbesondere als 3D-Kamera, projiziert entsprechend einem Lasertriangulationsverfahren mit einer Beleuchtungseinheit mindestens eine Beleuchtungslinie auf das zu erfassende Objekt. Eine Ablenkeinheit bewegt die Beleuchtungslinie in einer Art Scanverfahren durch den Erfassungsbereich, so dass die Beleuchtungslinie das Objekt überstreicht. Die Bewegung erfolgt vorzugsweise senkrecht zur Längsausdehnung der Beleuchtungslinie, jedenfalls mit einer Querkomponente, und vorzugsweise einmal über das gesamte Sichtfeld des Bildsensors. Falls nur ein Ausschnitt erfasst werden soll, oder in später erläuterten Ausführungsformen mit mehreren Linien, kann die Scanbewegung auch kleiner ausfallen. Ein Bildsensor mit einer Vielzahl von Lichtempfangselementen oder Pixeln, typsicherweise zu einer Matrix angeordnet, erfasst das Objekt und die darauf projizierte Beleuchtungslinie. Eine Steuer- und Auswertungseinheit berechnet aus Empfangssignalen der Pixel die dreidimensionalen Bilddaten.

Die Erfindung geht von dem Grundgedanken aus, einen ereignisbasierten Bildsensor zu verwenden. Die Lichtempfangselemente liefern also keine Grauwerte mit einer festen Bildwiederholrate, sondern erzeugen asynchron Empfangsereignisse, sobald sie eine Intensitätsänderung wahrnehmen. Mit einem solchen ereignisbasierten Bildsensor wird die Beleuchtungslinie schon direkt im Bildsensor erkannt. Die 3D-Erfassung ähnelt vom Aufbau des 3D-Sensors einer Lasertriangulation, aber die Auswertung beruht auf den Zeiten der Empfangsereignisse, die der ereignisbasierte Bildsensor liefert.

Die Erfindung hat den Vorteil, dass eine 3D-Erfassung mit hoher Auflösung und geringem Rechenaufwand ermöglicht wird. Ein großer Anteil der Bildauswertung wird bereits durch den ereignisbasierten Bildsensor geleistet, da die Beleuchtungslinie nicht erst im Bild lokalisiert werden muss. Für die weiteren Auswertungsschritte zum Gewinnen der dreidimensionalen Bilddaten genügt ein geeignetes Sammeln und Transformieren der Empfangsereignisse mit einfachen Rechenoperationen. Ereignisbasierte Bildsensoren sind im Markt verfügbar und durch Standard-CMOS-Prozesse herstellbar, es sind keine individuellen Chipentwicklungen erforderlich. Durch das Aufnahmeprinzip sind ereignisbasierte Bildsensoren äußerst robust gegenüber Störungen und weisen einen großen Dynamikbereich auf. Sättigungs- oder Übersteuerungseffekt treten im Vergleich zu herkömmlichen Bildsensoren kaum auf.

Vorzugsweise stellt ein jeweiliges Lichtempfangselement fest, wenn sich die von dem Lichtempfangselement erfasste Intensität ändert, und gibt genau dann ereignisbasiert ein Empfangsereignis aus. Das besondere Verhalten der Lichtempfangselemente oder Pixel einer ereignisbasierten Kamera wurde einleitend schon erläutert, worauf hier nochmals Bezug genommen wird. Das Pixel prüft, ob sich die erfasste Intensität verändert. Das ist ein Empfangsereignis, und nur bei einem Empfangsereignis wird eine Bildinformation ausgegeben oder ausgelesen. Es ist eine Art Hysterese beziehungsweise Rauschtoleranz denkbar, bei der das Pixelelement eine definierte, zu geringfügige Änderung der Intensität noch ignoriert und nicht als Ereignis auffasst. Aufgrund dieses ereignisbasierten Detektionsprinzips reagieren gerade diejenigen Pixel, auf die die Beleuchtungslinie fällt. Hinzu kommen natürlich Rauschereignisse durch Effekte wie Fremdlicht oder Bewegungsartefakte, die aber durch geeignete Rahmenbedingungen zumindest weitgehend unterdrückt werden können.

Das Lichtempfangselement gibt vorzugsweise als Empfangsereignis eine differentielle Information aus, ob sich die Intensität verringert oder erhöht hat. Das Empfangsereignis umfasst also beispielsweise ein Vorzeichen +1 oder -1 je nach Änderungsrichtung der Intensität. Dabei kann eine Schwelle für Intensitätsänderungen gesetzt sein, bis zu denen das Lichtempfangselement noch kein Empfangsereignis auslöst. Alternativ gibt das Lichtempfangselement eine integrierte Intensität in einem durch eine Änderung der Intensität bestimmten Zeitfenster aus. Dann beschränkt sich die Information eines Empfangsereignisses nicht auf eine Richtung der Intensitätsänderung, sondern es wird in einem durch das Empfangsereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Das Lichtempfangselement gibt Empfangsereignisse vorzugsweise mit einer Aktualisierungsfrequenz von mindestens einem KHz oder sogar mindestens zehn KHz aus. Die Aktualisierungsfrequenz einer herkömmlichen Kamera ist die Bildwiederholfrequenz oder Framerate. Eine solche gemeinsame Bildwiederholfrequenz kennt ein ereignisbasierter Bildsensor nicht, da die Lichtempfangsereignisse ihre Empfangsereignisse asynchron und ereignisbasiert ausgeben oder auffrischen. Dabei sind extrem kurze Ansprechzeiten möglich, die mit einer herkömmlichen Kamera nur zu immensen Kosten mit tausend oder mehr Bildern pro Sekunde erreichbar wären, bei einer ereignisbasierten immer noch möglichen Aktualisierungsfrequenz von zehn KHz oder sogar mehreren zehn KHz wäre das mit herkömmlichen Kameras technisch nicht mehr darstellbar.

Ein Empfangsereignis umfasst bevorzugt eine Information über das auslösende Lichtempfangselement, insbesondere als X-Y-Koordinate, und eine Zeitinformation. Das Empfangsereignis ist damit ein Datenpunkt, der den Ort des zugehörigen Pixels auf dem Bildsensor oder die X- und Y- Koordinate und einen Zeitstempel enthält, wann die Intensitätsänderung erfasst wurde. Ein herkömmlicher Datenstrom eines Bildsensors besteht aus den Intensitäts- oder Grauwerten der Pixel, und der Ortsbezug in der Bildsensorebene entsteht durch die Adressierung beziehungsweise dadurch, dass sämtliche Pixel in geordneter Abfolge ausgelesen werden. Bei dem ereignisbasierten Bildsensor werden stattdessen vorzugsweise Datentupel je Empfangsereignis ausgegeben, die das Empfangsereignis zuordenbar machen. Damit wird der Ort des zugehörigen Pixels und ein Zeitstempel festgehalten, wobei eine Intensitätsinformation, also das Vorzeichen +1, -1 oder eine integrierte Intensität hinzukommen kann.

Die Steuer- und Auswertungseinheit ist bevorzugt dafür ausgebildet, die Empfangsereignisse in einer Matrix mit Koordinaten des Bildsensors und einer Zeitkoordinate zu sammeln. Die einzelnen Empfangsereignisse können als Tupel [X,Y,t] aufgefasst werden. Werden sie über den Bildsensor und eine gewisse Dauer hinweg gesammelt, so können sie als dreidimensionale Matrix angeordnet werden. Das kann eine klassische Matrix sein, die an den Stellen ohne Empfangsereignis mit Nullen aufgefüllt ist. Wegen der hohen Zeitauflösung eines ereignisbasierten Bildsensors fallen dabei sehr viele Daten an. Deshalb können vorzugsweise die Empfangsereignisse intern weiterhin als eine Art Punktewolke gespeichert werden, oder es kann eine beliebige andere Repräsentation zur Speicherung und Verarbeitung einer dünn besetzten Matrix (sparse matrix) gewählt werden.

Die Steuer- und Auswertungseinheit ist bevorzugt dafür ausgebildet, die Empfangsereignisse durch eine Rotation auf eine Bezugsebene konstanter Zeit zu transformieren. Nach dieser Rotation entspricht dann die ehemalige Zeitachse der gesuchten dritten Bilddimension, d.h. aus den Tupeln [X,Y,t] werden die gesuchten dreidimensionalen Bildpunkte [X,Y,Z]. Die Rotation ist sehr einfach zu berechnen, komplizierte Bildauswertungen zum Auffinden der Beleuchtungslinie und anschließende Triangulationsberechnungen entfallen. Das ist deshalb möglich, weil in den Empfangsereignissen [X,Y,t] bereits die dreidimensionale Objektkonturen aufgenommen sind, sie aber aufgrund der Bewegung des Beleuchtungslinie noch einen jeweiligen Zeitversatz aufweisen. Sie stehen wegen dieses Zeitversatzes quasi schräg im [X,Y,t]-Raum, und dies wird durch die Rotation in eine senkrechte Bezugsebene, nämlich bei konstanter Zeit, auf einfache Weise korrigiert. Die Rotation ist besonders intuitiv nachvollziehbar, wenn man sich eine vollständige Matrix mit aufgefüllten Nullen vorstellt. Es genügt aber, die Rotation rechnerisch auf der dünn besetzten Matrix der tatsächlichen Empfangsereignisse durchzuführen, da eine Transformation zahlreicher Nullen keinen Erkenntnisgewinn mit sich bringt. Die konstante Zeit der Bezugsebene kann ohne Beschränkung der Allgemeinheit bei t=0 gewählt werden, der Unterschied ist lediglich ein gemeinsamer konstanter Versatz der dreidimensionalen Bildpunkte in der Z-Achse.

Die Steuer- und Auswertungseinheit ist bevorzugt dafür ausgebildet, die Empfangsereignisse durch eine Rotation zu transformieren, die die Bewegung der Beleuchtungslinie durch die Ablenkeinheit kompensiert. Das definiert die an sich bereits eingeführte Rotation nochmals auf eine alternative Weise. Auf dem Bildsensor bewegt sich die Beleuchtungslinie mit einer gewissen Geschwindigkeit, die von der Bewegung der Ablenkeinheit abhängt. Allein diese Scanbewegung führt schon dazu, dass manche Lichtempfangselemente ihre Empfangsereignisse früher auslösen als andere. Das allein ist aber nicht das beobachtete Zeitverhalten der Empfangsereignisse, weitere Zeitdifferenzen werden aufgrund von Sprüngen durch Objektkonturen überlagert. Die Rotation macht nun den Anteil der Zeitstempel der Empfangsereignisse, den die Scanbewegung der Ablenkeinheit verursacht, wieder rückgängig, und danach bleiben die Objektkonturen übrig. Etwas mathematischer formuliert dauert es eine Zeit dt, bis die Beleuchtungslinie auf dem Bildsensor jeweils eine Zeile weiterwandert. Somit kann je nach Abstand i (in Pixelgrößen) eines Lichtempfangselements von einem Bezugslichtempfangselement eine Zeitdifferenz i*dt kompensiert werden, um die Rotation zu realisieren. Ganz genau genommen ist dies keine Rotation, weil es noch eine zusätzliche Verzerrung in der X-Y-Ebene gibt, die aber linear ist und daher durch eine einfache Skalierung korrigiert werden kann.

Die Steuer- und Auswertungseinheit ist bevorzugt dafür ausgebildet, die Empfangsereignisse durch eine Rotation zu transformieren, die dadurch definiert ist, dass sie die Empfangsereignisse, die von einer Beleuchtungslinie auf einer Ebene senkrecht zur optischen Achse des Bildsensors ausgelöst würden, in eine Bezugsebene konstanter Zeit dreht. Das ist eine dritte alternative Definition der Rotation. Mit diesen alternativen Formulierungen sollen nicht unterschiedliche Verfahren, sondern nur unterschiedliche sprachliche Zugänge zu der Rotation angegeben werden. Für diese Formulierung sei hypothetisch zunächst kein Objekt in dem Erfassungsbereich vorhanden, sondern nur eine leere Fläche parallel zum Bildsensor. Die Beleuchtungslinie wandert über diese Fläche und löst nacheinander zeilenweise Empfangsereignisse in den Lichtempfangselementen aus. Dabei können die zeilenweise auslösenden Lichtempfangselemente einer Zeile in der Bildsensormatrix der Lichtempfangselemente entsprechen, aber diese Orientierung zwischen Beleuchtungseinheit, Ablenkeinheit und Bildsensor muss nicht gegeben sein. Im [X,Y,t]-Raum entsteht in der genannten hypothetischen Situation eine schräg stehende Ebene aus Empfangsereignissen. Die Rotation ist nun gerade so definiert, dass diese schräg stehende Ebene gerade ausgerichtet wird, also in eine Ebene [X,Y,t_{const}] gedreht wird. Wenn dann im allgemeinen Fall ein Objekt mit seinen Konturen die Struktur der Empfangsereignisse im [X,Y,t]-Raum verzerrt, bleiben nach der Rotation gerade die gesuchten Objektkonturen übrig.

Die Steuer- und Auswertungseinheit ist bevorzugt dafür ausgebildet, den Zeitpunkt der Erfassung der Beleuchtungslinie in einem Lichtempfangselement einem Empfangsereignis mit erhöhter Intensität zuzuordnen. Die Lichtempfangselemente registrieren die durch ihr Sichtfeld bewegte Beleuchtungslinie bei Eintritt wie bei Austritt und erzeugen dabei jeweils ein Empfangsereignis mit Vorzeichen +1 und ein Empfangsereignis mit Vorzeichen -1. Die erstgenannten Empfangsereignisse bei erhöhter Intensität sind zeitlich genauer lokalisiert und werden daher bevorzugt verwendet.

Die Steuer- und Auswertungseinheit ist bevorzugt dafür ausgebildet, den Zeitpunkt der Erfassung der Beleuchtungslinie in einem Lichtempfangselement durch Auswertung einer Abfolge von Empfangsereignissen mit erhöhter und verringerter Intensität zuzuordnen, insbesondere aus einem Vorzeichenwechsel. Der im Vorabsatz beschriebene Ablauf mit einem Vorzeichenwechsel +1 bei Eintritt und einem Vorzeichenwechsel -1 bei Austritt der Beleuchtungslinie aus dem Sichtfeld eines Lichtempfangselements ist idealisiert und vereinfacht. Es können mehr Empfangsereignisse erzeugt werden, einmal durch Rauscheffekte, aber auch deshalb, weil bei einer größeren Intensitätsänderung mehrere Empfangsereignisse nacheinander ausgelöst werden. Es ergibt sich also eine Abfolge von Vorzeichen +1 und -1, mit denen die Beleuchtungslinie genauer lokalisiert werden kann. Beispielsweise wird ein Intensitätsmaximum und damit die Mitte der Beleuchtungslinie bei einem ersten Übergang von +1 auf -1 vermutet.

Die Steuer- und Auswertungseinheit ist bevorzugt dafür ausgebildet, Empfangsereignisse zu kumulieren, um einen Grauwert zu bestimmen. Es werden also die Vorzeichen +1 beziehungsweise -1 kumuliert, um zusätzlich eine Information über die Textur im Erfassungsbereich zu gewinnen. Das entspricht dem Vorgehen eines oben schon erwähnten integrierenden ereignisbasierten Bildsensors, jedoch mit der Hardware eines differentiellen ereignisbasierten Bildsensors.

Die Beleuchtungseinheit ist bevorzugt dafür ausgebildet, mehrere zueinander parallele Beleuchtungslinien zu erzeugen. Die Beleuchtungslinien sind vorzugsweise äquidistant angeordnet. Es ergibt sich eine Art Mehrfachaufbau, oder die Scanbewegung kann auf diese Weise in mehrere kleinere Teilabschnitte unterteilt werden. Die jeweiligen dreidimensionalen Bilddaten werden abschließend zusammengefügt. Bei einer Rotation kann jeder zu jeweils einer Beleuchtungslinie gehörige Teilbereich einzeln bearbeitet werden.

Die Steuer- und Auswertungseinheit ist bevorzugt dafür ausgebildet, eine Bewegung eines erfassten Objekts mit Hilfe der Ablenkeinheit zu kompensieren. Das 3D-Erfassungsprinzip geht eigentlich von einem ruhenden Objekt aus. Eine Objektbewegung kann aber dadurch ausgeglichen werden, dass die Ablenkeinheit sich zusätzlich der Objektbewegung entsprechend bewegt, also je nach Bewegungsrichtung langsamer oder schneller.

Die Steuer- und Auswertungseinheit ist bevorzugt dafür ausgebildet, eine Bewegung eines erfassten Objekts einer Rotation zu kompensieren, mit der die Empfangsereignisse transformiert werden. Damit kann eine Objektbewegung allein durch Anpassung der Auswertung kompensiert werden. Die genannte Rotation ist diejenige, die oben zur Bestimmung der dreidimensionalen Bilddaten aus den Empfangsereignissen vorgestellt wurde. Diese Rotation kann zusätzlich eine Objektbewegung berücksichtigen, indem die Rotation dann nicht mehr allein die Scanbewegung, sondern die Überlagerung aus Scanbewegung und Objektbewegung kompensiert.

Dem Bildsensor ist bevorzugt ein auf die Beleuchtungseinheit abgestimmtes Filter vorgeordnet. Damit wird Fremdlicht ausgeblendet, es werden keine oder jedenfalls kaum noch Störereignisse erzeugt, nur soweit Fremdlicht zufällig dem Spektrum der Beleuchtungseinheit entspricht. Die verbleibenden Empfangsereignisse entsprechen noch zuverlässiger der Beleuchtungslinie.

Die Steuer- und Auswertungseinheit ist bevorzugt dafür ausgebildet, eine Bewegung eines Objekts zu schätzen. Damit kann dann auch eine Objektbewegung kompensiert werden, wenn das Objekt nicht ruht. Die Objektbewegung lässt sich wie üblich etwa durch Objektverfolgung oder Korrelationen bestimmen. Um das Objekt selbst überhaupt wahrzunehmen, können einige Pixelzeilen ohne auf die Beleuchtungseinheit abgestimmtes Filter vorgesehen sein.

Die Ablenkeinheit weist vorzugsweise eine Mikrooptik und oder eine Mikroaktorik. Damit kann die Scanbewegung, d.h. die Bewegung der Ablenkeinheit, die dafür sorgt, dass die Beleuchtungslinie den Erfassungsbereich und das Objekt überstreicht, mit einer sehr kompakten Baueinheit erzeugt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines 3D-Sensors;
- Fig. 2: eine Darstellung eines Scanbereichs einer Beleuchtungseinheit und eines Erfassungsbereichs eines Bildsensors eines 3D-Sensors zur Plausibilisierung des Arbeitsprinzips;
- Fig. 3: eine beispielhafte Intensitätsverteilung eines Pixels zur Erläuterung von ereignisbasierter Erfassung von Bildinformation;
- Fig. 4: eine dreidimensionale Darstellung von Empfangsereignissen eines ereignisbasierten Bildsensors bei Aufnahme einer leeren Fläche;
- Fig. 5: eine dreidimensionale Darstellung der Empfangsereignisse gemäß Figur 4 nach einer korrigierenden Rotation;
- Fig. 6: eine dreidimensionale Darstellung von Empfangsereignissen eines ereignisbasierten Bildsensors bei Aufnahme von Objekten;
- Fig. 7: eine dreidimensionale Darstellung der Empfangsereignisse gemäß Figur 6 nach einer korrigierenden Rotation;
- Fig. 8: eine Darstellung erfasster dreidimensionale Bilddaten bei langsamerer Bewegung der Beleuchtungslinie; und
- Fig. 9: eine Darstellung erfasster dreidimensionaler Bilddaten bei zusätzlicher Bestimmung von Grauwerten.

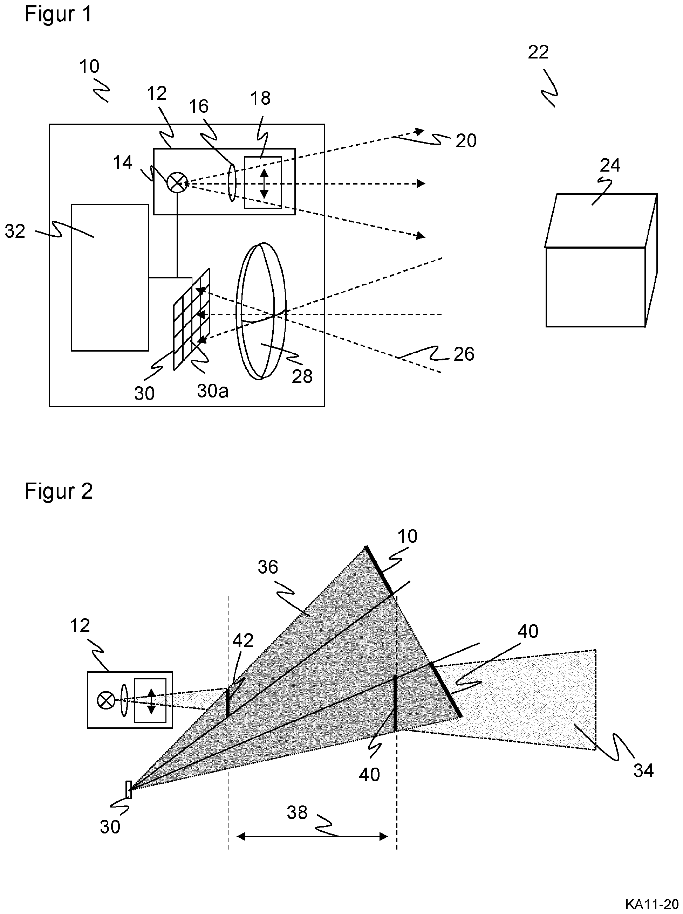

Figur 1 zeigt eine schematische Darstellung eines 3D-Sensors 10. Eine Beleuchtungseinheit 12 mit einer Lichtquelle 14, einer Sendeoptik 16 und einer Ablenkeinheit 18 erzeugt eine Beleuchtungslinie 20, die in einer Scanbewegung einen Erfassungsbereich 22 und ein dort befindliches Objekt 24 überstreicht. Als Lichtquelle 14 kann beispielsweise ein Laser oder eine lichtstarke LED eingesetzt werden. Die Sendeoptik 16 ist vereinfachend als einzelne Linse gezeigt, komplexere Anordnungen sind vorstellbar. In einigen Ausführungsformen wird ein anderes Beleuchtungsmuster als nur eine einfache Beleuchtungslinie erzeugt, insbesondere aus mehreren zueinander parallelen Beleuchtungslinien. Zum Erzeugen der Beleuchtungslinie oder anderer Muster kann ein nicht gezeigtes mustererzeugendes Element vorgesehen sein, beispielsweise ein DOE (diffraktives optisches Element), oder die Sendeoptik 16 fungiert als mustererzeugendes Element, indem sie beispielsweise Zylinderlinsen oder Mikrozylinderlinsen aufweist.

Die Ablenkeinheit 18 ist vorzugsweise aus einer Mikrooptik beziehungsweise Mikroaktorik aufgebaut. Dafür kommt ein DMD (Digital Micromirror Device) oder MEMS-Spiegel (Micro-Electro-Mechanical System) in Frage, oder ein Piezoaktor, der die Lichtquelle, ein Mustererzeugungselement oder ein Ablenkelement bewegt. Weitere Umsetzungsmöglichkeiten sind ein akusto-optischer Modulator oder ein Drehspiegel beziehungsweise Drehprisma.

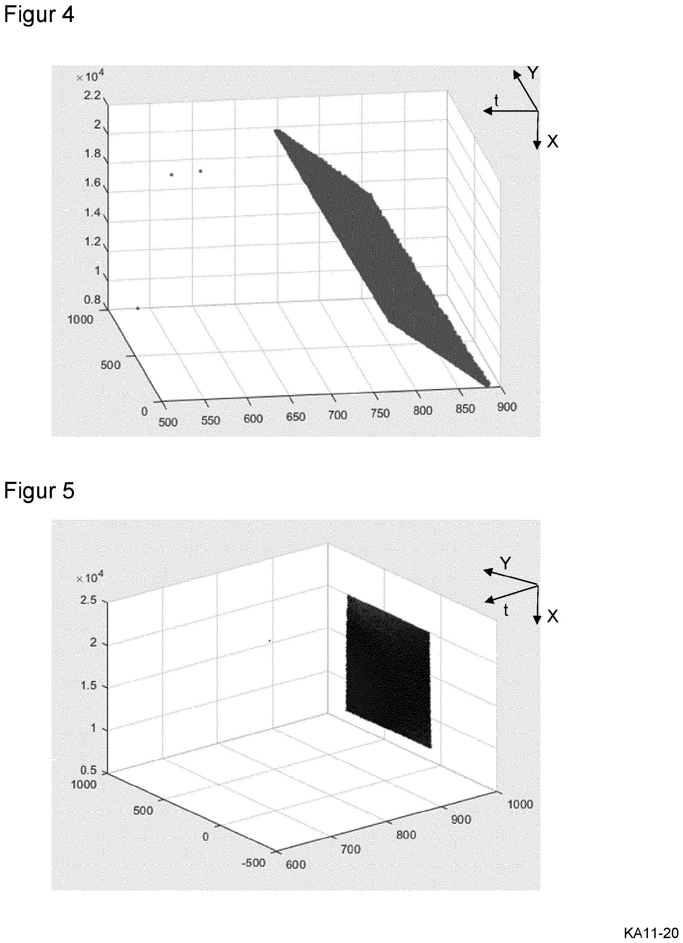

Die Beleuchtungslinien erzeugen Empfangslicht 26, das über eine Empfangsoptik 28 auf einen Bildsensor 30 mit einer Vielzahl von Pixeln oder Lichtempfangselementen 30a geführt wird. Der Bildsensor 30 ist ein ereignisbasierter oder neuromorphologischer Bildsensor wie einleitend schon eingeführt. Die von den Lichtempfangselementen 30a erzeugten Empfangsereignisse werden von einer Steuer- und Auswertungseinheit 32 weiterverarbeitet, um dreidimensionale Bilddaten des Erfassungsbereichs 22 beziehungsweise des Objekts 24 zu erzeugen. Diese Verarbeitung wird später unter Bezugnahme auf die Figuren 4 bis 9 genauer erläutert.

Figur 2 zeigt in einer weiteren Darstellung den Scanbereich 34 der Beleuchtungseinheit 12 sowie das Sichtfeld 36 des Bildsensors 30. Der Erfassungsbereich 22 ist effektiv auf deren Überlappungsbereich beschränkt, da nur hier dreidimensionale Bilddaten erfasst werden. Es ergibt sich daraus auch in Abstandsrichtung ein begrenzter Arbeitsbereich 38. Allerdings sind die geometrischen Verhältnisse in Figur 2 in Bezug auf Abstände, Größen, Öffnungswinkel und gegenseitige Anordnung und Ausrichtung nicht unbedingt repräsentativ, da hier nur ein prinzipieller Gedanke erklärt werden soll.

Die Bewegungsgeschwindigkeit der Beleuchtungslinie 20 ist in fernem Abstand 40 am Ende des Arbeitsbereichs 38 größer als in nahem Abstand 42 am Anfang des Arbeitsbereichs 38. Der Bildsensor 30 erfasst aber dennoch die Bewegung der Beleuchtungslinie, wie an einer jeweiligen Projektion 44, 46 in einer fernen Erfassungsebene des Bildsensors 30 illustriert, mit einer konstanten Winkelgeschwindigkeit. Wenn man also die Bewegungsgeschwindigkeit der Beleuchtungslinie in Pixel/Zeit betrachtet, ist sie doch konstant, weil die Auswirkungen auf die Geschwindigkeit durch die projektive Geometrie bei Beleuchtungseinheit 12 und Bildsensor 30 die gleichen sind. Die Beleuchtungslinie und deren Bewegung wird aber je nach Abstand in unterschiedlichen Lichtempfangselementen 30a erfasst, darauf beruht die Triangulation und damit die Abstandsbestimmung. Dank dieser Zusammenhänge kann die später erläuterte 3D-Erfassung funktionieren.

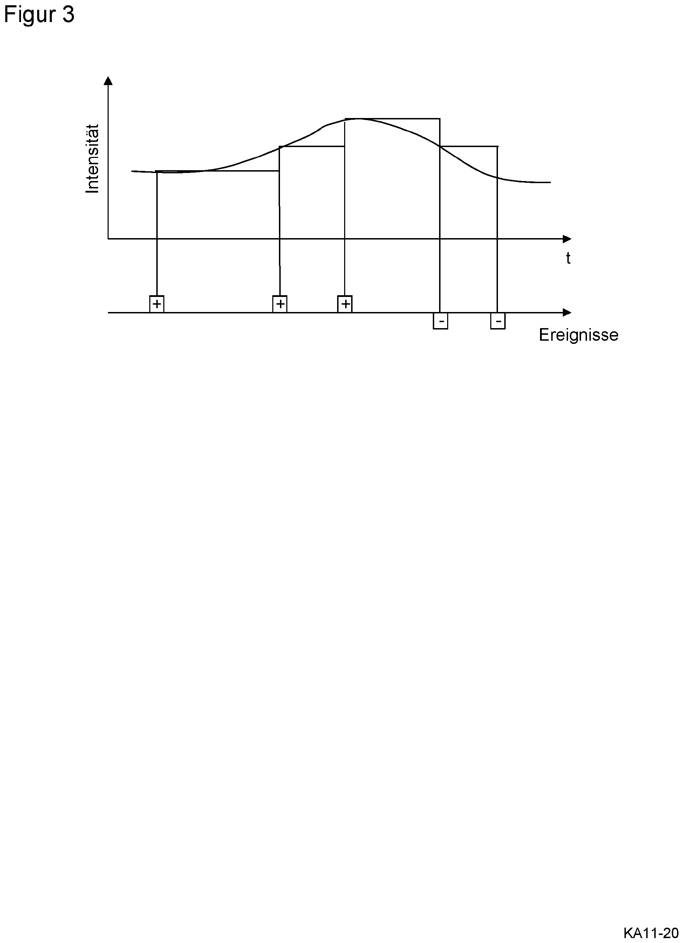

Figur 3 zeigt zur weiteren Erläuterung des Funktionsprinzips des ereignisbasierten Bildsensors 30 im oberen Teil einen rein beispielhaften zeitlichen Intensitätsverlauf in einem Pixel oder Lichtempfangselement 30a des Bildsensors 30. Ein herkömmlicher Bildsensor würde diesen Intensitätsverlauf über ein vorgegebenes Belichtungszeitfenster integrieren, die integrierten Werte aller Pixel würden im Takt einer vorgegebenen Framerate ausgegeben und dann für das nächste Bild zurückgesetzt.

Das Lichtempfangselement 30a reagiert stattdessen individuell und asynchron, unabhängig von einer Framerate, auf eine Intensitätsänderung. Mit senkrechten Strichen sind jeweils Zeitpunkte markiert, zu denen eine Intensitätsänderung festgestellt wurde. Im unteren Teil der Figur 3 sind zu diesen Zeitpunkten Ereignisse mit Vorzeichen Plus und Minus je nach Richtung der Intensitätsänderung dargestellt. Es ist denkbar, dass das Lichtempfangselement 30a nicht auf jegliche Intensitätsänderung reagiert, sondern erst, wenn eine gewisse Schwelle überschritten wird. Das Lichtempfangselement 30a wird ereignisbasiert zu den Zeitpunkten ausgelesen, zu denen eine Intensitätsänderung erkannt wird, und gibt dann das Vorzeichen aus. Ein Rohbild eines ereignisbasierten Bildsensors 30 zeigt anders als von herkömmlichen Bildern gewohnt nur die bewegten Kanten an, und damit im Zusammenhang mit dem 3D-Sensor 10 die bewegte Beleuchtungslinie 20.

Neben solchen differenziellen ereignisbasierten Kameras gibt es auch integrierende ereignisbasierte Kameras. Ein solche Kamera reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Die weiteren Beispiele in dieser Beschreibung beziehen sich auf eine differenzielle ereignisbasierte Kamera, aber die Erfindung ist darauf nicht beschränkt. Überhaupt ist die Technologie einer ereignisbasierten Kamera nicht Gegenstand, sondern Voraussetzung der Erfindung, und es wird ergänzend auf die einleitend genannte Patentliteratur und wissenschaftliche Literatur verwiesen.

Figur 4 zeigt beispielhaft eine dreidimensionale Darstellung von Empfangsereignissen des ereignisbasierten Bildsensors 30 bei Aufnahme einer leeren Fläche. Ein jeweiliges Lichtempfangselement 30a, das die Beleuchtungslinie 20 überstreicht, registriert die Intensitätsänderung und gibt ein Empfangsereignis aus. Das Empfangsereignis kann als Datenpunkt [X,Y,t] verstanden werden, mit Koordinaten X, Y des auslösenden Lichtempfangselements 30a und einem Zeitstempel t des Empfangsereignisses. Zusätzlich kann zur besseren Differenzierung noch das Vorzeichen ±1 der Intensitätsänderung übergeben werden.

Somit können Empfangsereignisse als Datenpunkte [X,Y,t] in ein dreidimensionales Koordinatensystem eingetragen werden. Es ist denkbar, die Empfangsereignisse über eine Scanbewegung der Beleuchtungslinie 20 in einer dreidimensionalen Matrix zu sammeln, die für alle Orte und Zeiten, in denen kein Empfangsereignis auftritt, auf Null gesetzt ist. Es genügt aber auch, die Empfangsereignisse als Punktewolke zu bearbeiten. Die konkrete interne Repräsentation ist nicht erfindungswesentlich, sondern ein Implementierungsdetail.

Wenn nun wie in Figur 4 die Beleuchtungslinie 20 über eine ebene Fläche streicht, so ergibt die Struktur der Empfangsereignisse die dargestellte schräg stehende Fläche. Die Schrägstellung rührt daher, dass die Lichtempfangselemente 30a, die später von der Beleuchtungslinie 20 getroffen werden, ihre Empfangsereignisse entsprechend später auslösen. Die Schräglage ist daher durch die Scanbewegung der Beleuchtungseinheit 12 bestimmt.

Um die ursprüngliche Geometrie der Fläche zurückzugewinnen, wird nun die Schrägstellung rückgängig gemacht. Die Struktur der Empfangsereignisse, wie in Figur 5 gezeigt, wird dafür im [X,Y,t]-Raum gedreht, damit sie auf einer Bezugsebene bei einer konstanten Zeit zu liegen kommt. Die erforderliche Rotation kann durch allgemeine geometrische Mathematik bestimmt werden. Da die Scanbewegung bekannt ist, kann sie ebenfalls für die Definition der Rotation herangezogen werden: Es müssen für eine kompensierende Rotation bei jedem Empfangsereignis die jeweiligen durch die Scanbewegung verursachten Zeitverzögerungen abgezogen werden.

Das Ergebnis der Rotation ist in Figur 5 gezeigt. Die Empfangsereignisse bilden nun eine Fläche bei t=const. Jetzt kann die t-Achse in neuer Rolle als Z-Achse aufgefasst werden, und es liegen die gesuchten dreidimensionalen Bilddaten in [X,Y,Z] vor. Die Auswertung der Empfangsereignisse zur Gewinnung dreidimensionaler Bilddaten reduziert sich somit auf eine einfache Rotation.

Die konkreten Zahlenwerte an den Achsen der Figuren sind im Übrigen als beliebig aufzufassen. Es kann sich um Pixelnummerierungen handeln, während die Zeitachse so skaliert, dass Abstände in t- beziehungsweise Z-Richtung geometrisch passen. Passende Reskalierungen in X, Y, Z sind einfach möglich, beispielsweise durch eine Kalibration aufgrund theoretische Überlegungen, Simulationen oder auch durch Aufnahme eines Maßkörpers. Deshalb ist die konkrete konstante Zeit bei t=1.000 der Figur 5 belanglos, es kann ohne Beschränkung der Allgemeinheit jede beliebige Zeit verwendet beziehungsweise der Bezugsebene der passende Z-Abstand der gewählten konstanten Zeit zugeordnet werden.

Die Rotation zur Gewinnung dreidimensionaler Bilddaten ist am Beispiel der Figuren 4 und 5 mit einer Fläche senkrecht zur optischen Achse des Bildsensors 30 besonders intuitiv verständlich. Die Auswertung ändert sich jedoch nicht weiter, wenn nun stattdessen ein Objekt 24 aufgenommen werden soll. Die soeben erläuterte Rotation auf eine Bezugsebene bei t=const., mit der die Bewegung der Beleuchtungslinie 20 kompensiert wird und die eine Fläche aus der Schräglage geradestellt, funktioniert ganz genauso auch für den allgemeinen Fall mit Objekt 24.

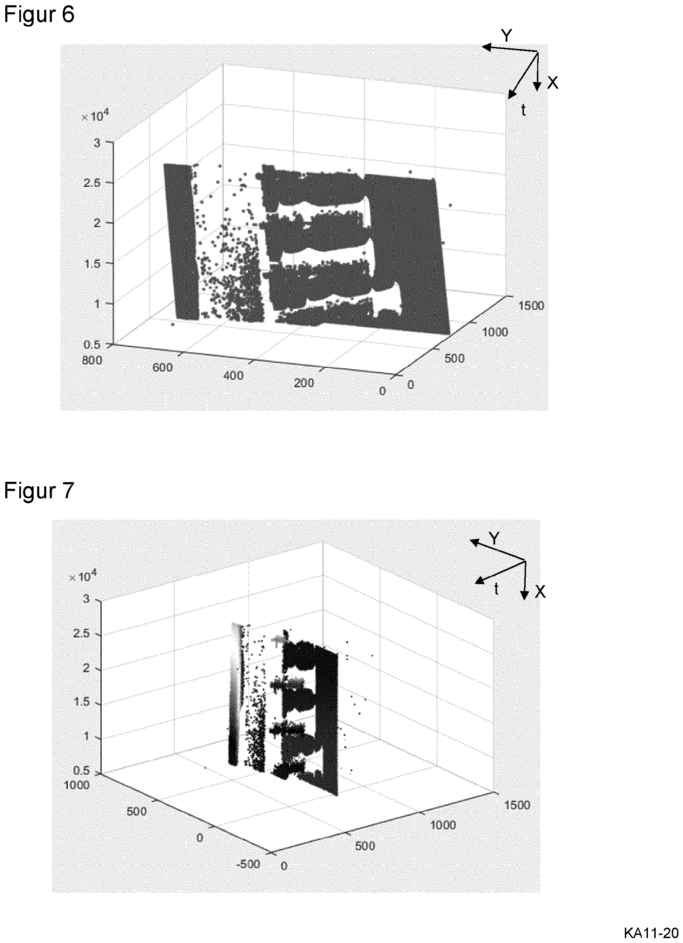

Figur 6 zeigt die Struktur der Empfangsereignisse für ein beispielhaftes Objekt 24 vor der Rotation. Die Objektkanten, in denen es Veränderungen oder Sprünge in Z-Richtung gibt, verursachen entsprechende Veränderungen oder Sprünge in der Struktur der Empfangsereignisse im [X,Y,t]-Raum. Die gezeigte Punktewolke der Struktur der Empfangsereignisse zeigt jedoch wegen der Überlagerung mit der Scanbewegung der Beleuchtungslinie 20 noch nicht die gewünschten dreidimensionalen Bilddaten.

In Figur 7 wurde auf die Struktur der Figur 6 die zu den Figuren 4 und 5 erläuterte Rotation angewandt. Dass die Objekte 24 mit dem bloßen Auge immer noch nicht gut erfassbar sind, liegt zum einen an der Auflösung und zum anderen an der Darstellung, tatsächlich liegen nun valide dreidimensionale Bilddaten in [X,Y,Z] vor.

Es genügt, um dies zu wiederholen, eine einfache Rotation, die durch die Scanbewegung der Beleuchtungslinie bestimmt ist, um aus den Empfangsereignissen dreidimensionale Bilddaten zu gewinnen. Es bedarf lediglich noch einer einfachen Reskalierung in Z-Richtung und, sofern nicht Pixelkoordinaten gewünscht sind, auch in X- und Y-Richtung in Abhängigkeit von den Sichtfeldern, der Auflösung und dergleichen. Außerdem sind noch ergänzende geometrische Korrekturen denkbar, die sich aus einer geringfügig unterschiedlichen Geschwindigkeit der Beleuchtungslinie 20 in dem Erfassungsbereich 22 und auf dem Bildsensor 30 ergeben, in dieser Hinsicht war die Erklärung zu Figur 2 eine gewisse Vereinfachung.

Das Ausmaß der Schräglage, die am besten ohne Objekt 24 wie in Figur 4 zu erkennen ist, hängt von der Geschwindigkeit der Scanbewegung ab. Je langsamer die Scanbewegung, desto besser wird die Auslösung. Zugleich wird mehr Aufnahmezeit und die Struktur der Empfangsereignisse wird steiler bezüglich t. Die Struktur in Figur 6 und 7 wurde beispielsweise mit einer relativ schnellen Scanbewegung aufgenommen.

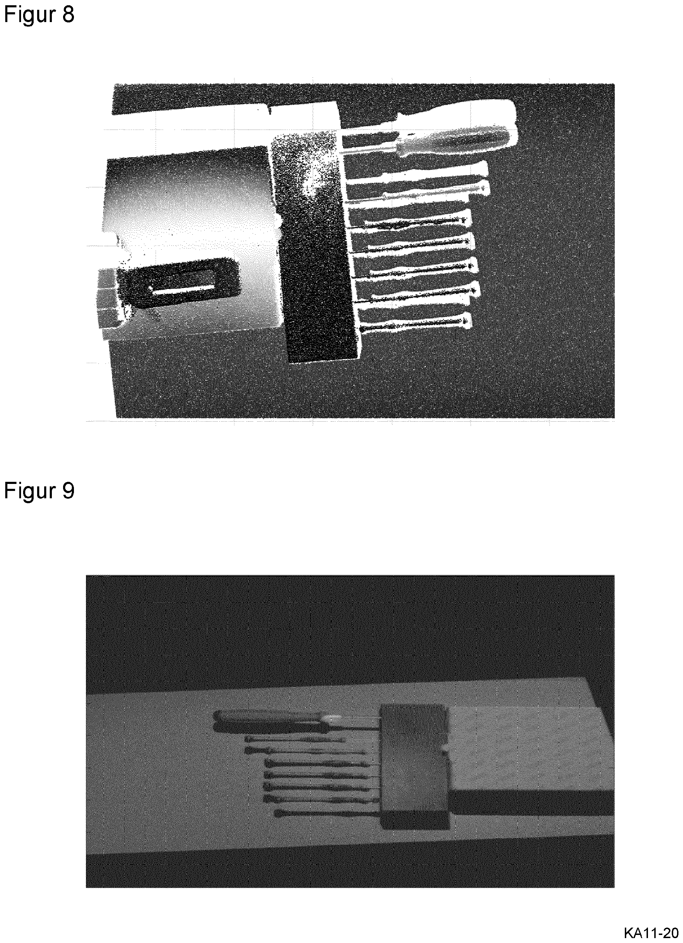

Figur 8 zeigt zum Vergleich eine Aufnahme bei einer langsameren Scanbewegung. Erkennbar ist zudem ein anderer Objektausschnitt gewählt. Mit immer noch kurzer Aufnahmedauer und einer sehr einfachen Rotation als Auswertung werden hochaufgelöste dreidimensionale Bilddaten erzeugt, die mit den Ergebnissen wesentlich aufwändiger zu berechnender herkömmlicher Lichtschnittverfahren zumindest vergleichbar sind.

Bisher wurde vereinfachend davon ausgegangen, dass die Beleuchtungslinie 20 in ihrer Scanbewegung durch ein Lichtempfangselement 30a genau ein Empfangsereignis auslöst. In der Realität werden aber mehrere Empfangsereignisse ausgelöst, wie dies beispielhaft in Figur 3 illustriert ist. Eine schmale, helle Beleuchtungslinie 20 löst sehr schnell mehrere Empfangsereignisse mit Vorzeichen +1 bei Eintritt in das Sichtfeld eines Lichtempfangselements 20 aus, dann aber schon Empfangsereignisse mit Vorzeichen - 1, sobald die Beleuchtungslinie 20 wieder aus dem Sichtfeld heraustritt. Letzteres Zeitfenster ist größer. Daher ist es besser, den Zeitstempel der Empfangsereignisse mit +1 beziehungsweise das erste dieser Empfangsereignisse zu verwenden, weil dies zeitlich präziser ist als die Empfangsereignisse mit -1.

Wie in Figur 3 zu erkennen, kann aus der Abfolge der Vorzeichen +1, -1 der Intensitätsverlauf zumindest grob rekonstruiert werden. Daher ist es auch denkbar, sich nicht auf ein bestimmtes Empfangsereignis als Auslöser festzulegen, sondern die Abfolge der Vorzeichen zu untersuchen. Das ergibt dann den Zeitpunkt beispielsweise des Intensitätsmaximums oder den ersten Wechsel von +1 auf -1. Ein solches Vorgehen ist auch vorteilhaft, um einen Schwarz-Weiß-Fehler zu korrigieren: Der Bildsensor 30 reagiert schneller auf helle als auf dunkle Bereich, weil mehr rückgestreute Photonen schneller zu einer registrierten Intensitätsänderung und damit einem Empfangsereignis führen. Das ergibt eine unerwünschte farb- oder intensitätsabhängige Verzerrung der Struktur der Empfangsereignisse. Wird aber die gesamte Abfolge der Vorzeichen untersucht, so kann dieser Fehler wenigstens teilweise kompensiert werden, indem ein zeitlich gegenüber Farben und Helligkeiten robustes Merkmal wie das Intensitätsmaximum herangezogen wird.

In vielen Fällen sollen nicht nur dreidimensionale Bilddaten, sondern auch Grau- oder Farbwerte erfasst werden. Ein Grauwert kann zumindest näherungsweise bestimmt werden, indem die Vorzeichen des Bildsensors 30 aufsummiert werden. Das entspricht grob dem Verhalten eines alternativ einsetzbaren integrierenden ereignisbasierten Bildsensors 30. Farbwerte könnten wie üblich durch entsprechende Farbfilter der Pixel gewonnen werden. Figur 9 zeigt ein mit diesem Vorgehen erzeugtes Grauwertbild.

Bisher wurde die Verwendung nur einer einzelnen Beleuchtungslinie 20 beschrieben. Es ist denkbar, mehrere Beleuchtungslinien zu verwenden, um die Aufnahmefrequenz oder die Genauigkeit zu erhöhen. Die Beleuchtungslinien teilen sich praktisch den Erfassungsbereich lateral auf, d.h. in X-Y-Richtung, und die jeweils erfassten dreidimensionalen Bilddaten werden dann zusammengesetzt. Der Winkel der Scanbewegung wird entsprechend reduziert. Dadurch genügt ein Bruchteil der Aufnahmezeit, oder die Scanbewegung wird bei gleicher Aufnahmezeit entsprechend langsamer und damit die Aufnahme genauer. Alternativ erfolgt praktisch eine Mehrfachmessung durch die verschiedenen ein Objekt 24 nacheinander überstreichenden Beleuchtungslinien mit gemeinsamer statistischer Auswertung der Empfangsereignisse.

Ist das Objekt 24 nicht in Ruhe, so verändert dessen Bewegung die Struktur der Empfangsereignisse im [X,Y,t]-Raum. Dies kann durch die Ablenkeinheit 18 kompensiert werden, die dann praktisch ihrer Scanbewegung noch die Objektbewegung überlagert. Statt schon bei der Aufnahme zu kompensieren, kann die Eigenbewegung des Objekts 24 auch in der zu den Figuren 4 bis 7 erläuterten Rotation mit berücksichtigt werden. Die Bewegung des Objekts 24 kann der 3D-Sensor 10 durch übliche Verfahren wie Korrelationen, optischen Fluss und Objektverfolgung messen. Ein Problem hierbei ist, dass das Objekt 24 eigentlich gar nicht wahrgenommen werden soll. Dafür wird beispielsweise ein Filter vor dem Bildsensor 30 eingesetzt, der nur die Beleuchtungslinie 20 durchlässt, oder der Erfassungsbereich 22 wird abgedunkelt. Es ist dann denkbar, einige Lichtempfangselemente 30 am Rand des Bildsensors 30 nicht mit einem Filter auszustatten beziehungsweise das Objekt 24 für eine Bewegungsbestimmung doch zu beleuchten.

## Patentansprüche

1. 3D-Sensor (10) zur Erfassung von dreidimensionalen Bilddaten eines Objekts (24) in einem Erfassungsbereich (22), der eine Beleuchtungseinheit (12) zur Erzeugung mindestens einer Beleuchtungslinie (20) in dem Erfassungsbereich (22), eine Ablenkeinheit (18) zum Bewegen der Beleuchtungslinie (20) über den Erfassungsbereich (22), einen Bildsensor (30) mit einer Vielzahl von Lichtempfangselementen (30a) sowie eine Steuer- und Auswertungseinheit (32) aufweist, die dafür ausgebildet ist, aus Empfangssignalen der Lichtempfangselemente (30a) die dreidimensionalen Bilddaten zu erzeugen,
**dadurch gekennzeichnet,**
**dass** der Bildsensor (30) ein ereignisbasierter Bildsensor ist, dessen Lichtempfangselemente (30a) als Empfangssignale Empfangsereignisse erzeugen.

2. 3D-Sensor (10) nach Anspruch 1,
wobei ein jeweiliges Lichtempfangselement (30a) feststellt, wenn sich die von dem Lichtempfangselement (30a) erfasste Intensität ändert, und genau dann ereignisbasiert ein Empfangsereignis ausgibt, wobei insbesondere das Lichtempfangselement (30a) als Empfangsereignis eine differentielle Information ausgibt, ob sich die Intensität verringert oder erhöht hat.

3. 3D-Sensor (10) nach Anspruch 1 oder 2,
wobei ein Empfangsereignis eine Information über das auslösende Lichtempfangselement (30a), insbesondere als X-Y-Koordinate, und eine Zeitinformation umfasst, wobei insbesondere die Steuer- und Auswertungseinheit (32) dafür ausgebildet ist, die Empfangsereignisse in einer Matrix mit Koordinaten des Bildsensors (30) und einer Zeitkoordinate zu sammeln.

4. 3D-Sensor (10) nach einem der vorhergehenden Ansprüche,
wobei die Steuer- und Auswertungseinheit (32) dafür ausgebildet ist, die Empfangsereignisse durch eine Rotation auf eine Bezugsebene konstanter Zeit zu transformieren.

5. 3D-Sensor (10) nach einem der vorhergehenden Ansprüche,
wobei die Steuer- und Auswertungseinheit (32) dafür ausgebildet ist, die Empfangsereignisse durch eine Rotation zu transformieren, die die Bewegung der Beleuchtungslinie (20) durch die Ablenkeinheit (18) kompensiert.

6. 3D-Sensor (10) nach einem der vorhergehenden Ansprüche,
wobei die Steuer- und Auswertungseinheit (32) dafür ausgebildet ist, die Empfangsereignisse durch eine Rotation zu transformieren, die dadurch definiert ist, dass sie die Empfangsereignisse, die von einer Beleuchtungslinie (20) auf einer Ebene senkrecht zur optischen Achse des Bildsensors (30) ausgelöst würden, in eine Bezugsebene konstanter Zeit dreht.

7. 3D-Sensor (10) nach einem der vorhergehenden Ansprüche,
wobei die Steuer- und Auswertungseinheit (32) dafür ausgebildet ist, den Zeitpunkt der Erfassung der Beleuchtungslinie (20) in einem Lichtempfangselement (30a) einem Empfangsereignis mit erhöhter Intensität zuzuordnen.

8. 3D-Sensor (10) nach einem der vorhergehenden Ansprüche,
wobei die Steuer- und Auswertungseinheit (32) dafür ausgebildet ist, den Zeitpunkt der Erfassung der Beleuchtungslinie (20) in einem Lichtempfangselement (30a) durch Auswertung einer Abfolge von Empfangsereignissen mit erhöhter und verringerter Intensität zuzuordnen, insbesondere aus einem Vorzeichenwechsel.

9. 3D-Sensor (10) nach einem der vorhergehenden Ansprüche,
wobei die Steuer- und Auswertungseinheit (32) dafür ausgebildet ist, Empfangsereignisse zu kumulieren, um einen Grauwert zu bestimmen.

10. 3D-Sensor (10) nach einem der vorhergehenden Ansprüche,
wobei die Beleuchtungseinheit (12) dafür ausgebildet ist, mehrere zueinander parallele Beleuchtungslinien (20) zu erzeugen.

11. 3D-Sensor (10) nach einem der vorhergehenden Ansprüche,
wobei die Steuer- und Auswertungseinheit (32) dafür ausgebildet ist, eine Bewegung eines erfassten Objekts (24) mit Hilfe der Ablenkeinheit (18) zu kompensieren und/oder eine Bewegung eines erfassten Objekts (24) bei einer Rotation zu kompensieren, mit der die Empfangsereignisse transformiert werden.

12. 3D-Sensor (10) nach einem der vorhergehenden Ansprüche,
wobei dem Bildsensor (30) ein auf die Beleuchtungseinheit (12, 14) abgestimmtes Filter vorgeordnet ist.

13. 3D-Sensor (10) nach einem der vorhergehenden Ansprüche,
wobei die Steuer- und Auswertungseinheit (32) dafür ausgebildet ist, eine Bewegung eines Objekts (24) zu schätzen.

14. 3D-Sensor (10) nach einem der vorhergehenden Ansprüche,
wobei die Ablenkeinheit (18) eine Mikrooptik und oder eine Mikroaktorik aufweist.

15. Verfahren zur Erfassung von dreidimensionalen Bilddaten eines Objekts (24) in einem Erfassungsbereich (22), wobei mindestens eine Beleuchtungslinie (20) erzeugt und über den Erfassungsbereich (22) bewegt wird und wobei ein Bildsensor (30) mit einer Vielzahl von Lichtempfangselementen (30a) Empfangssignale erzeugt, aus denen die dreidimensionalen Bilddaten gewonnen werden,
**dadurch gekennzeichnet,**
**dass** der Bildsensor (30) ein ereignisbasierter Bildsensor ist, dessen Lichtempfangselemente (30a) als Empfangssignale Empfangsereignisse erzeugen.
